# EUROPEAN PATENT SPECIFICATION

(11) **EP 2 240 755 B1**
(45) Date of publication and mention of the grant of the patent: **01.01.2025**
(21) Application number: 09708428.9
(22) Date of filing: 05.02.2009
(51) Int. Cl.: G01N 1/22, G01N 1/26, G01N 1/24

(54) **SYSTEM AND METHOD FOR AIR SAMPLING IN CONTROLLED ENVIRONMENTS**
SYSTEM UND VERFAHREN ZUR LUFTPROBENNAHME IN KONTROLLIERTEN UMGEBUNGEN
SYSTÈME ET PROCÉDÉ D ÉCHANTILLONNAGE D'AIR DANS DES ENVIRONNEMENTS CONTRÔLÉS

(30) Priority: 07.02.2008 US 68483
(43) Date of publication of application: 20.10.2010
(73) Proprietor: Veltek Associates, INC., Malvern, PA 19460 (US)
(72) Inventor: CALIO, Rosario, Exton, PA 19341 (US)
(74) Representative: P&TS SA (AG, Ltd.)
(86) International application number: PCT/US2009/033163
(87) International publication number: WO 2009/100184

(56) References cited:
- US-A- 5 831 182
- US-A- 5 838 008
- US-A1- 2006 173 579
- US-B1- 6 295 864
- US-B1- 6 425 297
- US-B1- 6 425 297

## Description

### BACKGROUND OF THE INVENTION

### Field of the Invention

The present invention relates to a vacuum pump and a controller (located outside a controlled environment) that draws air via air tubes from air sampling devices within the controlled environment. In particular, the present invention relates to devices and methods for remotely controlling the intake of air from within the controlled environment.

### Description of the Related Art

Clean rooms found in manufacturing, research, and other facilities are typically classified into two broad categories based on the static air pressure inside the rooms relative to atmospheric pressure and/or the air pressure in spaces adjacent the clean rooms. A positive air pressure room is maintained at an absolute air pressure greater than atmospheric pressure, greater than the air pressure in spaces adjacent the clean room, or both. The positive air pressure in such rooms is provided by pumping filtered and/or conditioned air into the rooms and controlling the flow of air out of the rooms. The adjacent spaces, which may be manufacturing facilities or offices, are typically maintained at or close to atmospheric pressure by heating, ventilation, and air conditioning (HVAC) systems, or by providing an opening to the environment that allows the adjacent spaces to equilibrate with atmospheric pressure. Thus, air flowing from the positive pressure clean room will flow toward the lower pressure in adjacent rooms or to the atmosphere.

When a positive air pressure clean room is breached, air flowing to adjacent spaces or the atmosphere is generally not a problem as long as airborne contaminants present in the clean room do not pose a potential adverse health effect. Typically, the air inside clean rooms in which electronics, aerospace hardware, optical systems, military equipment, and defense-related research are manufactured or conducted may not contain airborne gases, vapors, and particulate matter at concentrations that present a safety or health concern to human health or the environment. However, that is not always the case, as other operations within those industries may generate contaminants that are above acceptable levels and, therefore, must be prevented from escaping the clean room without treatment.

A negative air pressure room is maintained at an absolute air pressure that is either less than atmospheric pressure, less than the air pressure in spaces adjacent the clean room, or both. The negative pressure is maintained by pumping air out of the room. Negative pressure rooms are often used when there is a concern that contaminants in the air may pose a potential health threat to human health in adjacent spaces, or the environment.

Notwithstanding the human health and environmental implications, certain types of manufacturing and research operations must be conducted within a positive air pressure clean room to satisfy regulatory requirements and industry-adopted good manufacturing and laboratory quality control standards. For example, state and federal regulations, including those promulgated by the National Institute for Occupational Safety and Health (NIOSH), may necessitate the use of positive or negative pressure clean rooms.

In particular, the U.S. Food & Drug Administration (FDA) requires that pharmaceutical production be done within the confines of clean rooms that provide for the validation and certification that manufactured batches of pharmaceutical products are being done in a sanitary environment.

Positive and negative air pressure clean rooms have been used for many years. U.S. Patent No. 4,604,111, for example, discloses a negative pressure apparatus and method for protecting the environment and populations from airborne asbestos and other particulate contamination inside a building, which includes an enclosure having a blower to pull air into a filtration unit inside the enclosure and dispel the filtered air to the atmosphere. U.S. Patent No. 5,645,480 discloses the general features of a clean room.

Various FDA regulations and standards also specify requirements for air sampling and/or air monitoring equipment to be used inside clean rooms to verify or validate the cleanliness of the facility during certain drug manufacturing activities. The regulations also provide for electronic data recording, accuracy, precision, and record-keeping relating to monitoring the air quality within clean rooms. Similar requirements are imposed on other industries, such as the biotechnology industry.

U.S. Patent No. 6,514,721 describes an air sampling device and method for collecting airborne pathogens and psychrometric data from a room or from remote air samples where the sample volume is electronically controlled by closely monitoring fan speed. The patent illustrates a device that draws room air into the device using a pump, which causes pathogen-containing particulates in the air to impact a growth/inhibitor media (a solid, liquid, gel, or mixture thereof) stored in a dish that is positioned within the sampling device. The patent states that previous sampling devices could not achieve a constant volumetric air flow of better than ± 30% relative to a nominal or set-point flow rate, which caused a large variability in calculated concentrations of pathogens.

As the U.S. 6,514,721 patent suggests, one of the keys to successfully monitoring the air quality within a clean room is to ensure that the air flow rate through the air sampling/monitoring devices is very accurately determined during the time when a volume of air is collected. That fact is also appreciated in U.S. Patent No. 4,091,674, which discloses an electronically timed, positive displacement air sampling pump for use with a wide variety of air sample collecting devices and in a wide range of environmental conditions. The disclosed invention is said to provide for accurate average flow rate, independently metered total volume, operating time register, and audible "rate fault" alarm. In that patent, accuracy is achieved by using a timing circuit coupled with mechanical bellows.

U.S. Patent No. 6,216,548 illustrates a control system flow chart for an air sampling device for use in a controlled environment. In particular, the patent discloses a controller logic that involves turning on a pump, checking pressure, monitoring sampling time, drawing air into the sampler, shutting off the pump, and checking for leaks in the lines. The patent also teaches using a purge system for purging the lines and associated air particulate sampler using a purge gas such as nitrogen gas.

US6425297 discloses a networked air measurement system.

US2006173579 discloses an air monitoring system.

None of the prior art devices and air sampling methods described above are suitable for monitoring the level of contaminants in the air of a modern clean room, where issues of sample volume accuracy and precision, system control and monitoring, reporting, modularity, and remote monitoring are important. Accordingly, there exists a need for such a device and method for air sampling.

### SUMMARY AND OBJECTS OF THE INVENTION

The air sampling/monitoring system of the present invention is useful in clean rooms such as those operated by pharmaceutical, biotechnology, semiconductor, and electronics industries, among others. The system is designed to test the air within a clean room to identify the level of viable contamination that is present in a volume of air. The system is set out in appended claims 9-15.

It is an object of the present invention to provide a method for collecting a volume of air from a controlled environment within a facility. The method is set out in appended claims 1-8.

### BRIEF DESCRIPTION OF THE DRAWINGS

**FIG. 1** is a schematic of an exemplary facility having a clean room therein according one aspect of the present invention;
**FIG. 2** is a block diagram of an air sampling/monitoring system according to one embodiment of the present invention for use in the clean room of **FIG. 1****;**
**FIG. 3** is a block diagram of a controller connected to a base station and a touchpad according to one embodiment of the present invention;
**FIG. 4** is a block diagram of a port of the controller shown in **FIG. 3****;**
**FIG. 5** is a block diagram of a purge system for purging the air sampling devices according to one embodiment of the present invention;
**FIG. 6** is a process flow diagram illustrating an isolator controller logic;
**FIG. 7** is a block diagram of a touchpad according to one aspect of the present invention; and
**FIG. 8** is a block diagram of an air sampling/monitoring system according to another embodiment of the present invention for use in the clean room of **FIG. 1****.**

### DETAILED DESCRIPTION OF THE PREFERRED EMBODIMENT

Several preferred embodiments of the invention are described for illustrative purposes, it being understood that the invention may be embodied in other forms not specifically shown in the drawings.

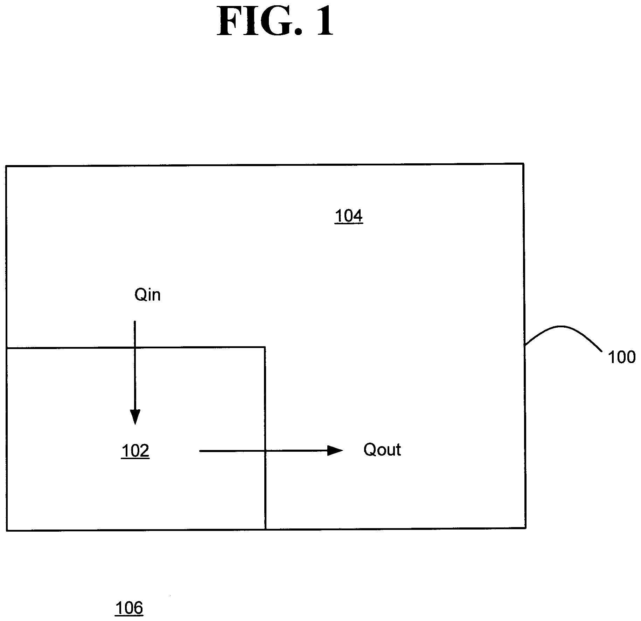

Turning first to **FIG. 1****,** shown therein is a schematic of an exemplary facility 100 having one or more clean rooms 102 therein. The clean room 102 is adjacent a space 104 and the outdoor atmosphere 106. The adjacent space 104 may be any one or more rooms within the same facility 100 that the clean room 102 is located and that adjoins the clean room 102, such as, for example, a separate manufacturing room, another clean room, a finish and fill room, a research laboratory, or offices. The clean room 102 and adjacent space 104 are separated by a divider, such as a wall.

The clean room 102 in the exemplary facility 100 is capable of being maintained at an air pressure P₁ that is less than the air pressure P₂ of the adjacent space 104, and also less than atmospheric air pressure P_{ATM}. This is accomplished by an HVAC system (not shown) that causes conditioned and filtered air to be pumped into the clean room 102 at a controlled flowrate Qᵢₙ as depicted in **FIG. 1****.** Air inside the clean room 102 that is pumped out of or otherwise flows out of the clean room 102 is represented by Qₒᵤₜ. As long as the difference between Qᵢₙ and Qₒᵤₜ is greater than zero, a positive pressure should be maintained in the clean room 102.

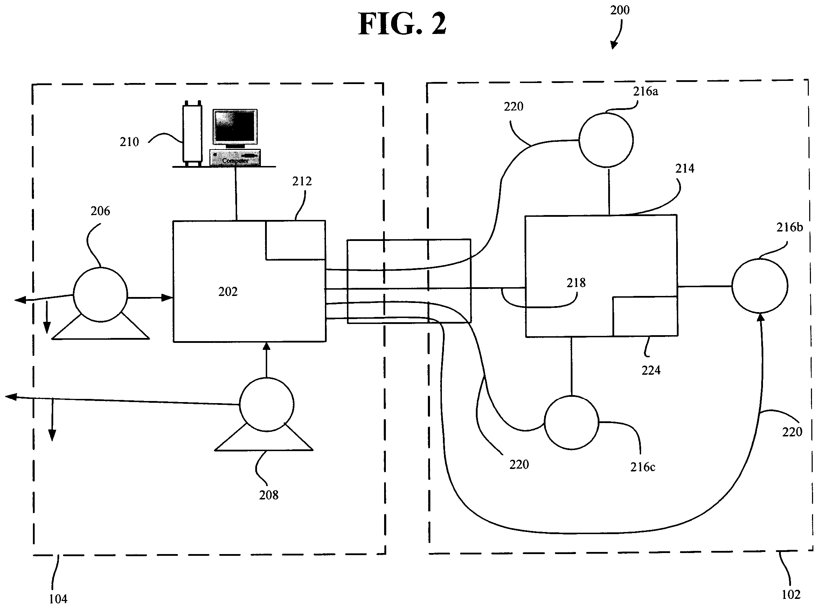

Turning now to **FIG. 2****,** shown therein is a block diagram of an air sampling/monitoring system 200 according to one embodiment of the present invention for use in sampling or monitoring the air in the clean room 102. The air sampling/monitoring system 200 includes a controller 202, a vacuum pump 208, an optional purge pump 206, and an optional computer 210, all of which may be co-located together in adjacent space 104 that is adjacent or remote from (i.e., not directly adjacent) the clean room 102.

Remotely connected to the controller 202 is a stand-alone wall-mountable or benchtop touchpad 214 and one or more air sampling devices 216a, 216b, 216c,..., 216*n*, where *n* is preferably 1-10, but that number is not limited by the air sampling/monitoring system 200 to any particular quantity of air sampling devices. That is, the system is linearly scalable above or below 10 air sampling devices. A typical air sampling device suitable for use with the present invention is the SMA^{™} Atrium by Veltek Associates, Inc., Malvern, PA. The air sampling devices 216a, 216b, 216c,..., 216*n* according to the present invention may be any known air sampling device for collecting a volume of air. The terms "collecting," "sampling," "monitoring," and the like are not used to refer just to whole air sample devices, but also refer to devices that process a flow of fluid in order to separate certain gases, vapors, and particulate matter in the fluid for subsequent analysis and quantification. The terms "air" and "fluid" are used interchangeably to refer to gases, vapors, and particulates; thus, "air sampler" does not mean that only air is being collected.

Although **FIG. 2** shows only a single touchpad 214 connected to multiple air sampling devices 216a, 216b, and 216c, it is also contemplated that there may be other arrangements of touchpads and air sampling devices. For example, there may be a one-to-one ratio of individual or discrete touchpads 214 and air sampling devices 216, or perhaps a single touchpad 214 may be connected to two or more air sampling devices 216a and 216b, while a separate touchpad 214 may be connected to a third air sampling device 216c.

The touchpad 214 is in communication with the controller 202 using wireless means such as a receiver/transmitter 212 associated with the controller 202, and a receiver/transmitter 224 associated with the touchpad 214. The receiver/transmitters 212, 224 are on the same high frequency that is unique to the overall air sampling/monitoring system 200. The frequency is selected so as to reduce the likelihood of interference with other equipment in the facility 100, and to permit communications when the controller 202 and the touchpad 214 are remotely located from each other.

The one or more air sampling devices 216a, 216b, 216c are connected to a vacuum pump 208 (described below) by way of the controller 202 using one or more air tubes 220, which may be 0.25-inch vacuum tubing on the clean room 102 side of the air sampling/monitoring system 200, and 3/8-inch vacuum tubing on the adjacent space 104 side of the air sampling/monitoring system 200. Within the controller 202 is a manifold (not shown) that ties all of the individual air tubes 220 together and connects them to the vacuum side of the vacuum pump 208. Individual solenoids (not shown) associated with the air tubes 220 are used to turn on the air flow to each air sampling device 216.

The touchpad 214 and air sampling devices 216 are co-located together in the clean room 102, or in a portion of the clean room 102. The one or more air tubes 220 are connected to a wall-mounted quick disconnect outlet 226 located at the wall in the clean room 102.

The vacuum pump 208 is a demand pump that operates upon receiving a signal from the controller 202 to operate at the beginning of an air sampling cycle. It is powered by a standard alternating current provided by the facility 100 in which the air sampling/monitoring system 200 is installed, or by power from the controller 202 (or both). The vacuum pump 208 is connected to the controller 202 using 0.75-inch (inside diameter) vacuum tubing (other size tubing may also be used). The vacuum pump 208 according to one embodiment of the present invention is a 1.5 HP motor vacuum pump. The discharge from the vacuum pump 208 is directed outside the adjacent space 104, or within the adjacent space 104, as needed as shown by discharge tubes 222.

The optional purge pump 206 may be connected to the controller 202 using 0.25-inch (inside diameter) vacuum tubing (other size tubing may also be used). The discharge from the purge pump 206 is directed outside the adjacent space 104, or within the adjacent space 104, as needed. The discharge will most likely be processed through an abatement system (not shown) to collect or scrub purge gases and contaminants collected during the purge cycle (described below).

The computer 210 may be used as a data recorder. The computer 210 may be a dedicated computing device; however, if a dedicated or network computing device is already installed at the facility 100, the computer 210 is not needed for data recording purposes. Data recorded by the computer 210 include time of sample, sample date, length of sample, and sample location, among other data.

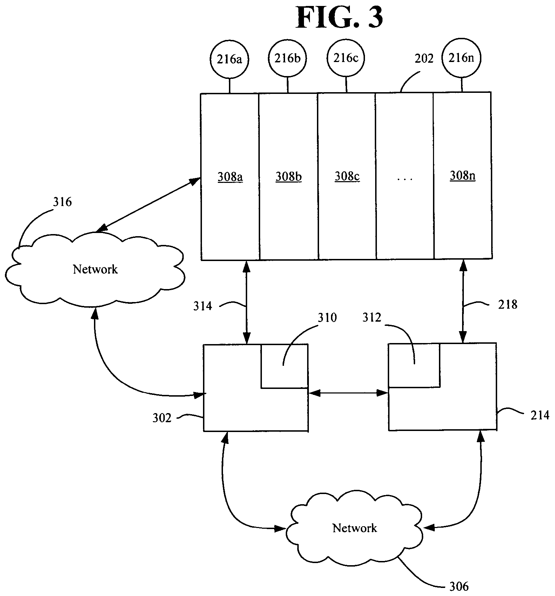

Turning now to **FIG. 3****,** shown therein is a block diagram of the controller 202 of the present invention connected to a base station 302 and a touchpad 214. The controller 202 includes one or more individual modular ports 308a, 308b, 308c,..., 308*n*, for connecting the controller 202 to the individual air sampling devices 216a, 216b, 216c,..., 216*n*, respectively, and one or more touchpads 214 (only one touchpad 214 is shown). The simplest configuration would be a single controller 202 having a single port 308a in one room, connected to one or more air sampling devices 216 and a single touchpad 214 in another room. An additional port 308b can then be added to the controller 202 to connect with an additional one or more air sampling devices 216 (and the touchpad 214 can be updated to have an interface that controls the second air sampling device 216 or a second touchpad 214 may be used). The touchpad 214 and air sampling devices 216 of the port 308b can be in the same room as the touchpad 214 and the air sampling devices 216 for the port 308a, but in a different area of that room, or can be in an entirely different room. The ports 308a, 308b, 308c,..., 308*n* are further modular because they include their own dedicated power, hardware and software, including fittings and connectors necessary for operation. In other words, the modularity makes the system easily configurable by adding or removing ports 308a, 308b, 308c,..., 308*n* to connect with individual touchpads 214 and their associates one or more air sampling devices 216a, 216b, 216c,..., 216*n*, respectively.

Although **FIG. 3** shows the touchpad 214 connected to a single port 308*n*, it can be connected to each of the ports 308a, 308b, 308c,..., 308*n* and, indirectly to each of the air sampling devices 216a, 216b, 216c,..., 216*n*, respectively (or directly connected to each of the air sampling devices, as best shown in **FIG. 2**). The controller 202 passes signals between the touchpad 214 and the sampling device 216 connected to a particular port 308. Thus, the control signals send from the touchpad 214 or the port 308a are sent to the air sampling device 216 also connected to that same port 308a, but not to the air sampling device 216 connected to the port 308b.

Because the controller 202 is modular, it may have any number of ports *n*, depending upon the needs of the clean room 102 (or clean rooms) as specified, for example, in the individual facility air sampling protocol, standard operating procedures, quality assurance/quality control plans, regulations, etc. For example, the controller 202 may be used to control 1, 2, 3, *...n* air samplers deployed within one or more clean rooms 102, in which case it will have a corresponding number of ports. Preferably, one or more of the individual air sampling devices 216a, 216b, 216c,..., 216*n*, and one touchpad 214 are connected to each one of the individual ports 308a, 308b, 308c,..., 308*n*.

Each of the individual ports 308a, 308b, 308c,..., 308*n* include at least a connector for connecting the individual ports 308a, 308b, 308c,..., 308*n* to data loggers, such as the computer 210, or to other devices. Preferably, at least two multi-pin connectors are used. Pairs of multi-pin connectors are electrically connected in parallel. A suitable pin connector would include, but is not limited to, a 9-pin connector.

The base station 302 is needed in case the touchpad 214 is designed without wireless communications features for communicating with the controller 202. The base station 302 may be co-located with the touchpad 214 inside the clean room 102. The base station 302, which acts primarily as a data communications relay between the touchpad 214 and the controller 202, may be operatively connected to the touchpad 214 via a data communications network 306 such that the touchpad 214 does not need to be directly connected to the controller 202 (i.e., it may be connected wirelessly). The data communications network 306 may be any proprietary or public network, including a packet-switched network, such as the Internet, a local area network, a wireless network, or a combination of networks. Communications between the base station 302 and the touchpad 214 via the data communications network 306 could be facilitated by receiver/transmitters 310, 312.

The controller 202 and the base station 302 may be operatively connected to each other via a wireless data communications network 316 using an integrated radio with digital input/outputs (not shown). The data communications network 316 may be any proprietary or public network, including a packet-switched network, such as the Internet. The receiver/transmitters of the controller 202 and the base station 302 are on the same high frequency that is unique to the overall air sampling/monitoring system 200. The frequency is selected so as to reduce the likelihood of interference.

The base station 302 interface operates as a two-way (point to point) monitoring and control device with expandable input/output options. The receiver/transmitter 310 located in the base station 302, and the receiver/transmitter 312 located in the touchpad 214 located in the clean room 102 are a dedicated pair that only communicate with each other. The receiver/transmitters 310, 312 connect to input/output circuit boards that observe that the individual ports 308a, 308b, 308c,..., 308n are powered up, are in an air sampling mode, and broadcast an air flow error during an air sampling cycle. The base station 302 can detect the state of activity of each of the individual ports 308a, 308b, 308c,..., 308*n*. The base station 302 located near the controller 202 has an input/output that is cabled directly to its corresponding port 308a, 308b, 308c,..., 308*n* in the controller 202.

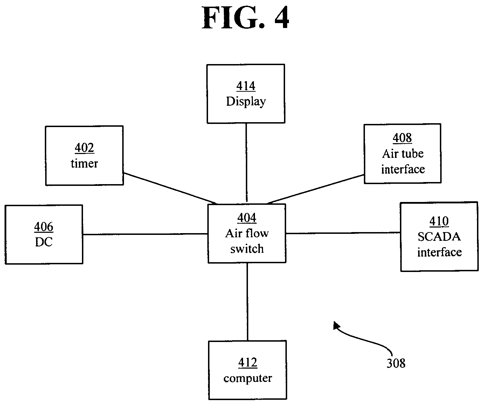

Turning now to **FIG. 4****,** shown therein is a block diagram of an exemplary port 308 of the controller 202 according to one embodiment of the present invention. The port 308 has its own dedicated timer 402, air flow switch 404, direct current power supply 406, air tube interface 408, facility System Control and Data Acquisition (SCADA) interface 410, and computer 412. The port 308 is modular and independent of other ports associated with the controller 202, as previously described. Thus, in the event the port 308 fails, the remaining ports associated with the controller 202 can continue to function within calibration tolerances. The modular design also removes the possibility of a single point system failure. The port 308 has its own direct current power 406, and is not dependent on a centralized power source to operate. Ground loop or direct current voltage shifts are eliminated by using optical coupling circuits (not shown), thus providing stable and robust performance. These circuits isolate the SCADA direct current ground and the SCADA voltage distribution system from the direct current voltage and ground distribution system (not shown) of the controller 202. If a facility system is present, it and the controller 202 will not depend on a common direct current ground bus connection. This enables the facility system and the controller 202 to be connected with long cables without extraordinary direct current ground interconnection between the two systems. The facility system sends a current signal or receives a current signal that is referenced to the facilities' direct current power system. This is a safe and effective way of eliminating the interconnection of two systems that have different power requirements.

The dedicated timer 402 is used to monitor the air sampling cycle duration. The timer 402 may be located at the controller 202 outside the clean room 102, or at the touchpad 214 inside the clean room 102 and connected to the controller 202 via line 218. The status of the timer 402 for the port 308 is observable at the controller 202 and/or at the touchpad 214. Each timer 402 may run independently or simultaneously with other ports 308. The timer 402 may be calibrated to a known standard to obtain very accurate readings. The timer 402 starts the air sampling cycle and issues commands through its input/output to open solenoids (not shown) and start the vacuum pump 208. The timer 402 lets the air flow switch 404 know that a sampling cycle has been initiated and declares a 1 cfm error signal if the proper air flow is not present. The timer 402 also provides +12 volts direct current power to other components of the port 308 and touchpad 214.

The controller 202 has an internal interface that can connect to a customer's SCADA interface 410, or computer 412, or a programmable logic controller (PLC) that can interface with a monitoring system associated with the facility 100. The controller 202 includes an isolator interface (not shown) that will not create any voltage shifts or ground loops when connected to a facility system, which can cause information problems for the facility or the controller 202. The purge mode of the controller 202 is not interfered with or affected by the wireless controls or isolation interface input/outputs of the system 200.

The nominal or set-point volumetric flow rate through each of the one or more air sampling devices 216a, 216b, 216c is 1 cfm (or 30 lpm). This is accomplished by the 1 cfm circuit and the air flow switch 404. The air flow switch 404 includes a digital air flow display 414 that may be programmed to display air flow rate in liters per minute (lpm), cubic feet per minute (cfm), or other units. The air flow switch 404 generates an error signal if the air flowing through the port 308 during an air sampling cycle, T, does not meet a pre-programmed or set-point 1 cfm air flow value or satisfy pre-determined tolerances. The signal allows the user to be alerted to a problem with a particular air sample. Because the air flow switch 404 is a digital switch, it may be easily calibrated against a standard flow switch (such as a National Institute of Standards and Technology-certified switch), and it is insulated from affects caused by pressure variations in the air flow tubing or the location of the air flow switch 404. A digital flow switch also eliminates internal piping variations from system to system, and it has an integrated flow adjustment pinch valve, which reduces piping.

The air flow switch 404 is mechanically and electrically connected to an air tube interface 408, which receives air tube 220 to provide a physical connection between the air flow switch 404 of the port 308 and a remote air sampling device 216 (as shown in **FIG. 2**). While a digital air flow switch 404 is preferred, a float type meter (rotameter) could also be used, if pressure variations are taken into account. Rotameters are less desirable because, among other things, it may be necessary to provide a calibration conversion device and computed transfer function, and the rotameter must be positioned at a suitable level and angle to permit accurate manual readings.

The air flow switch 404 sits between the one or more air sampling devices 216a, 216b, 216c and the 1 cfm circuit, and is designed to maintain a steady-state flow rate through the one or more air sampling devices 216a, 216b, 216c and associated air tubing 220, with a detectable air flow rate deviation tolerance of ± 3-percent from the nominal set-point flow rate (typically, the concern is when the flow rate decreases 3% from the nominal set-point flow rate). This air flow rate accuracy, which provides a margin of error of about 2-percent for a system calibrated for ±5-percent, for example, is achieved through a combination of routine and non-routine calibration checks using a standard flow switch, as discussed above, and software and hardware that constantly monitors flow rate in real-time or near real-time. The air flow switch 404 is programmed to send an error signal to a 1 cfm circuit board (not shown) when the air flow is below the programmed set-point or low-flow value. That is, the flow switch 404 informs the 1 cfm circuit that the air flow is below the 3-percent minimum level programmed into the system. The 1 cfm circuit checks to ensure the air flow rate error is valid. If the circuit confirms the validity of the air flow, it sends a signal to the individual port 308a, 308b, 308c,..., 308*n* that is doing the air sampling.

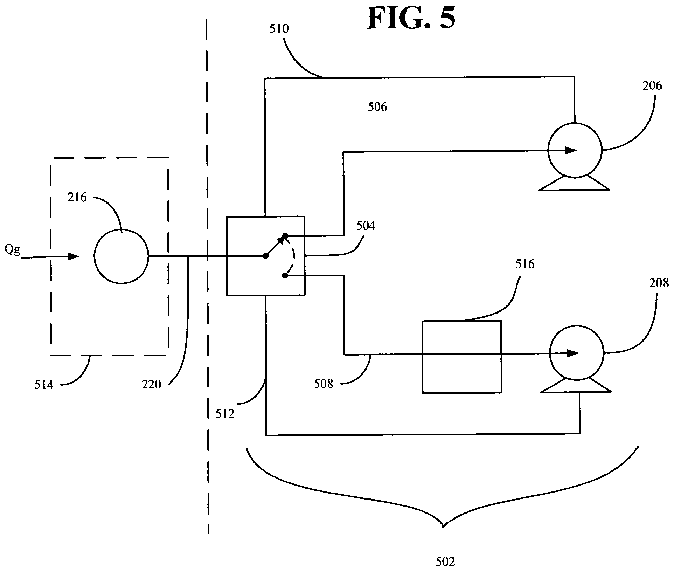

The flow switch 404 has low and high set-points, which are programmable. When the air flow is too far above or below the set-point values, the flow switch 404 sends a digital "on" signal to the 1 cfm circuit that the air flow is in error. The 1 cfm circuit is active during an air sampling cycle, and a signal from the flow switch 404 will cause the 1 cfm circuit to send or broadcast a flow error to the controller 202, touchpad 214, wireless control panels, and an isolator controller 504 (**FIG. 5**).

The SCADA interface 410 allows the port 308 to connect to a facility SCADA, which allows the air sampling/monitoring system 200 to be integrated into other facility data collection and monitoring systems. The isolation interface prevents the present system from compromising the controller or the SCADA system performance by eliminating ground loops and voltage shifts when connecting to third-party equipment, as previously described.

The port 308 may be directly connected to, or interconnected to, a separate computer 412 in addition to being connected to the touchpad 214. The separate computer 412 has software and hardware to implement the functions of the port 308. The separate computer 412 can be a processor with memory. The controller 202 may also have a central processor, and the separate computer 412 communicates with that processor to control the overall operation of the controller 202 and the air sampling/monitoring system 200.

Turning now to **FIG. 5****,** shown therein is a purge system 502 for purging the air sampling devices 216a, 216b, 216c,..., 216*n* and associated air tubes 220 to ensure there is no residual contaminants in those portions of the air sampling/monitoring system 200. An isolator controller 504 controls operation of the vacuum pump 208 and purge pump 206 in accordance with an air sampling cycle and a purge cycle. In the air sampling cycle, the isolator controller 504, which can be a three-way solenoid, causes the vacuum pump 208 to stop by sending a signal to the vacuum pump 208 via an electrical connection 512. At the same time, the isolator controller 504 controls the purge pump 206 to engage by sending a signal to the purge pump 206 via an electrical connection 510. When those signals are sent, air is not pulled through the air sampling devices 216a, 216b, 216c,..., 216*n* and air tube 508 by the vacuum pump 208, but is instead pulled through the air sampling devices 216a, 216b, 216c,..., 216*n* and air tube 506 by the purge pump 206. Thus, during the air sampling cycle, air flow is steered to the vacuum pump 208 and the purge path is closed. The opposite is done during the purge cycle, whereby air flow is steered to the purge pump 206 and the air sampling path is closed.

Although the isolator controller 504 preferably is associated with up to 10 individual ports 308 and corresponding air sampling devices 216, **FIG. 5** shows only one port/air sampling device. During any air sampling cycle, the controller 202 is prevented from initiating a purge cycle. However, once the air sampling cycles for each of the air sampling devices 216 are complete, the controller 202 is set in the purge mode. The isolator controller 504 ports each have a dedicated solenoid (not shown) that will direct the air collected during the purge cycle to a purge exit 222 (as best seen in **FIG. 2**).

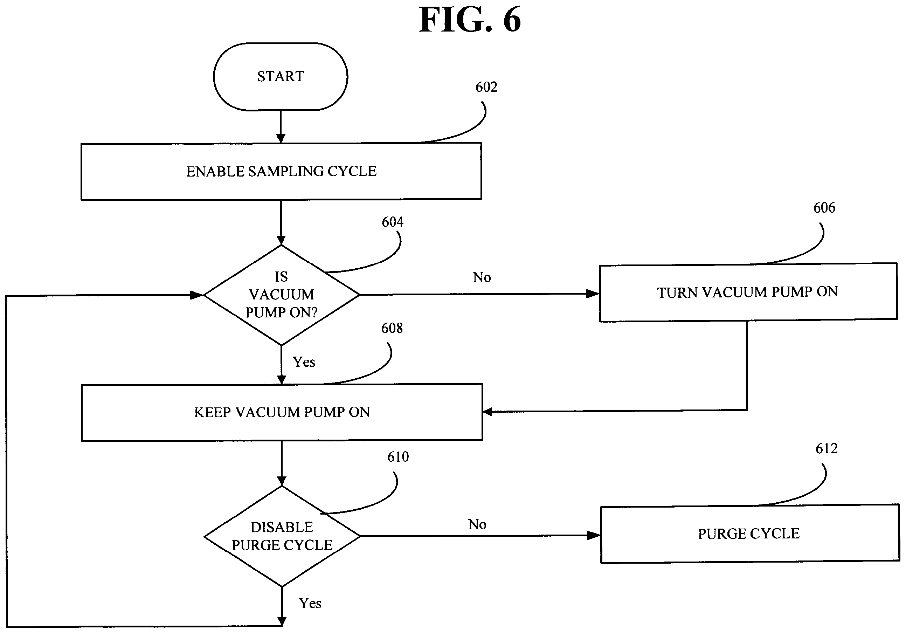

**FIG. 6** is a process flow diagram illustrating the isolator controller logic according to one embodiment of the present invention. In step 602, the process enables the air sampling cycle, which is the normal operation of the system. In step 604, the isolator controller 504 checks if the vacuum pump 208 is on. If the vacuum pump 208 is on, then the purge pump 206 is necessarily off, since the isolator controller 504 can only enable the vacuum pump 208 or the purge pump 206 at any one time. If the vacuum pump 208 is not on, then the vacuum pump 208 is turned on in step 606. This can be accomplished automatically based on a preprogrammed time or operation, or manually by entering a command at a remote computer 210 or at the local touchpad 214.

In step 608, the isolator controller 504 keeps the vacuum pump 208 on. In step 610, the isolator controller 504 checks to see if the purge cycle should continue to be disabled. If so, the process returns to step 604 and the sampling cycle continues. Once the isolator controller 504 receives a signal from the controller 202 to enter the purge cycle, in step 612, the isolator controller 504 starts the purge cycle. At the end of the purge cycle, the isolator controller 504 returns to the air sampling cycle, at step 604, or possibly shuts off the system until the next air sampling system starts. In general, the purge cycle will run until the next air sampling cycle is scheduled, which could be, for example, once every 24 hours. In some clean rooms 102, such as a class 100 clean room, it may not be necessary to run a purge cycle during the period when the air sampling cycle is not being performed. The isolator controller logic is implemented by an isolator printed circuit board (not shown) that interfaces with the SCADA (typically operated by a PC) or programmable logic controllers. The board eliminates the joining of the facility voltage system with the power system of the present invention.

The isolation circuit board is located in the controller 202 and can be connected to the SCADA or to a programmable logic controller system. All commands and observations can be made at the touchpad 214. The wireless and isolation features of the system 200 can be implemented on any of the three interfaces connected to the controller 202. For example, when a wireless panel receives a command to start an air sampling cycle, the touchpad 214, the controller 202, and the computer 210 will each observe the air sampling cycle in progress. Also for example, when a air flow error is detected, the controller 202 can broadcast the error detected in a particular port 308 to the touchpad 214 and the computer 210 (or any other input/output device connected to the system 200 that may be used).

The purging cycle involves injecting steam, hydrogen peroxide, or other vapor/gas into the air flow through the air sampling devices 216a, 216b, 216c,..., 216*n* and air tube 220. This may be accomplished by isolating the air sampling devices 216a, 216b, 216c,..., 216*n* in one or more isolator chambers 514 and introducing a flow of purging gases at flow rate Q_{g} into the chamber when the purge cycle is turned on. The isolator chamber 514 does not have or allow any human contact inside the enclosure. Other techniques for purging and decontaminating air tubes are well known in the art. Users of the present system involved in pharmaceutical manufacturing operations will desire to sanitize various system components before any drug substances are mixed and before commencing with finish and fill operations. The purge mode of the present invention allows the sterilization of the tubes directly connected to the isolator. The purge vapor/gas exits the isolator controller 504. During the isolated purging cycle, the air flowing through the air tube 508 may be conditioned by gas conditioning device 516, which may comprise particulate filters (not shown), organic adsorbents, activated charcoal, a knockout drum, cyclone, or other substance or device, or combination of substances and devices.

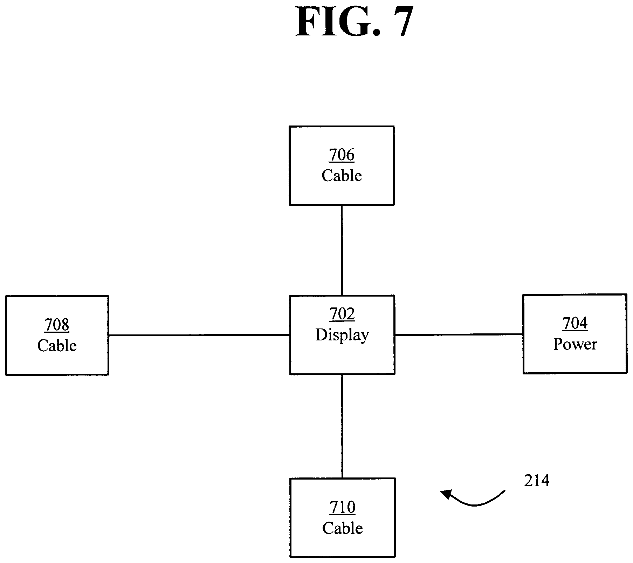

Turning now to **FIG. 7****,** shown therein is a block diagram of a touchpad 214 according to one aspect of the present invention. The touchpad 214, as discussed previously, may be a static wall-mounted device, or it may be portable and adapted to being located on any flat surface, such as a bench, inside a working area of the clean room 102. The touchpad 214 is the human interface input/output device for the air sampling/monitoring system 200. It remotely controls the controller 202 which is located outside the clean room 102. This design removes most of the electronics of the system from the aseptic areas of the clean room 102, including the system power supply, flow switch circuitry, and other electronics. The touchpad 214 electronics are sealed inside the device so that the device may be disinfected like other portions of the clean room 102.

The touchpad 214 allows the user to start, stop, program, and monitor the air sampling and purge cycles within the clean room 102. It also allows the user to abort an air sampling cycle, hear an audible signal or observe a visible signal when an air sampling cycle is complete, observe an airflow error if one is detected during an air sampling cycle, and activate an alarm. For example, a visible signal may be generated when the system detects a 1 cfm air flow error above or below a pre-programmed set-point flow rate. The visible signal may cause one or more light-emitting diodes (LEDs) to illuminate to provide a visible alarm to the user. A start up/abort printed circuit board (not shown) controls the run and abort inputs of the timer 402 (see **FIG. 4**).

The start signal is an input to the controller 202 from the touchpad 214 or the timer 402 (associated with one of the ports 308), which will initiate a sampling cycle in the controller 202 hardware. When the individual ports 308a, 308b, 308c,..., 308*n* on the controller 202 receive the start signal, the controller 202 will start a sampling cycle by controlling isolator controller 504. The controller 202 then informs the touchpad 214 that a sampling cycle instruction signal has been issued.

The abort signal is an input to the controller 202 that halts the sampling cycle already in progress. When the individual ports 308a, 308b, 308c,..., 308*n* of the controller 202 receive the abort signal, the controller 202 will instruct the touchpad 214 by controlling isolator controller 504. The controller 202 then informs the touchpad 214 that the sampling cycle instruction signal has been halted.

When a sampling cycle is in progress, the individual ports 308a, 308b, 308c,..., 308*n* of the controller 202 will instruct the touchpad 214 and, if necessary, the SCADA interface 410 (in order to communicate with a separate facility system), that a sampling cycle is in progress and this signal will remain active for the remainder of the sampling duration.

When an individual port 308a, 308b, 308c,..., 308*n* is in the middle of a sampling cycle and an air flow deficiency is detected, the controller 202 will broadcast a 1 cfm error to the port that is sampling. The power input to the SCADA system will go from active to non-active during a sampling cycle for that port, and continue on/off for the duration of the sampling cycle or until the 1 cfm error is removed.

The touchpad 214 includes a display 702. The display 702 includes switches for powering up the touchpad 214 and the individual ports 308a, 308b, 308c,..., 308*n* on the controller 202 to which the touchpad 214 is connected One or more LEDs provides a visual confirmation that the power on the touchpad 214 has been activated and that the vacuum pump 208 is on. The display 702 is adapted to display accurate flow rate information regardless of the composition of the air (i.e., amount of nitrogen, argon, and carbon dioxide gases).

Each touchpad 214 includes its own power source 704, or it may be electrically connected and powered by the controller 202 through cable 706 (which is the same as cable 218 in **FIG. 2**), which provides voltage to the touchpad 214. The touchpad 214 utilizes a shielded plenum wire consisting of less than about 2 watts of power.

The touchpad 214 wirelessly provides a signal to one of the individual ports 308a, 308b, 308c, ..., 308n on the controller 202. The touchpad 214 may also provide a signal to one of the other individual ports 308a, 308b, 308c, ..., 308n on the controller 202.

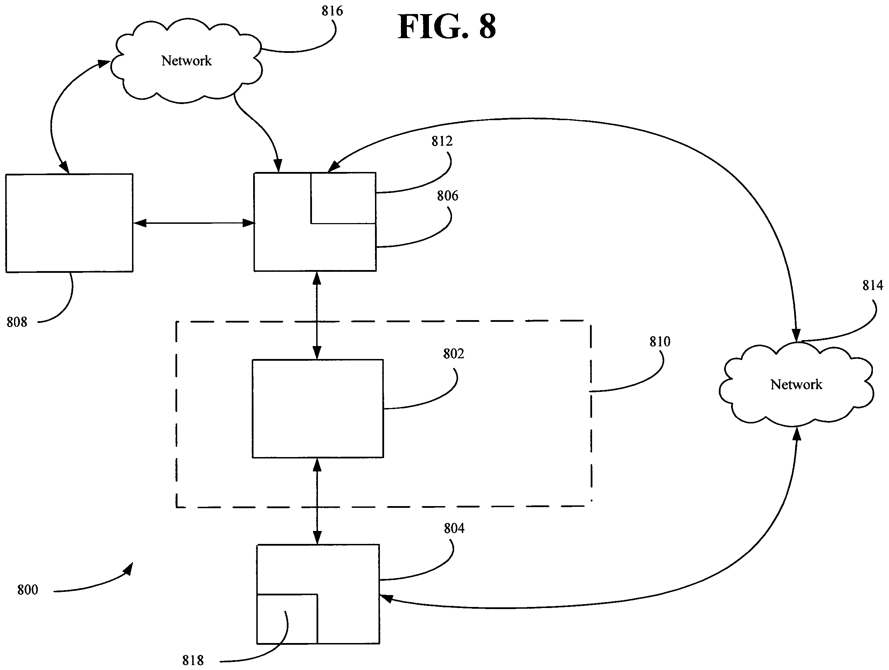

Turning now to **FIG. 8****,** shown therein is a block diagram of an air sampling/monitoring system 800 according to another embodiment of the present invention for use in the clean room 102. The air sampling/monitoring system 800 includes an air sampling device 802, a controller 804, a base module 806, and a control panel 808.

The air sampling device 802 in **FIG. 8** is shown located within a laminar air flow hood or isolation chamber 810, which may include a high efficiency particulate air (HEPA) filter (not shown). The the air sampling device 802 and the controller 804 are provided in a single portable device that may be placed in any location within the clean room 102, or outside the clean room 102, as necessary.

The controller 804 may include a self-contained air sampling pump 818. The air sampling device 802 is attached to the controller 804 as shown using a vacuum air tube that is about seven feet or less. The features of the controller 804 are similar to those described above in connection with the description of **FIG. 3****.** For example, the controller 804 provides for a 1 cfm air flow error detection during an air sampling cycle, and it is easily connected to a facilities' SCADA.

The base module 806 is electrically connected to the controller 804 and air sampling device 802, or wirelessly connected to the controller 804 via network 814 using receiver/transmitter 812. The base module 806, which is typically fixed at a location near the air sampling device 802, routes signals between the controller 804 and the control panel 808 either by wire or wireless network 816 using receiver/transmitter 812. Thus, the panel 808, which may be wall-mountable, provides the user with input/output control of the air sampling device 802 by way of the controller 804. Because the configuration in **FIG. 8** is wireless, the air sampling/monitoring system 800 does not require any penetration of walls, ceilings, or floors for routing of cables or air tubes.

Although certain presently preferred embodiments of the disclosed invention have been specifically described herein, it will be apparent to those skilled in the art to which the invention pertains that variations and modifications of the various embodiments shown and described herein may be made without departing from the scope of the invention. Accordingly, it is intended that the invention be limited only to the extent required by the appended claims and the applicable rules of law.

## Claims

1. A method for collecting a volume of air from a controlled environment (102) within a facility (100), comprising the steps of:
providing two or more air sampling devices (216a, 216b, 216c, ... 216n) at different locations within the controlled environment (102);
providing a controller (202) at a location (104) outside the controlled environment (102) that includes a port (308a, 308b, 308c, ... 308 n) corresponding to each of the two or more air sampling devices (216a, 216b, 216c, ...216n), each port (308a, 308b, 308c, ... 308 n) having its own dedicated flow switch (404) and tube port (408) in separate fluid communication with its corresponding air sampling device (216a, 216b, 216c, ... 216n) via a corresponding air tube (220), each flow switch (404) being configured to separately monitor fluid flow through its corresponding air sampling device (216a, 216b, 216c, ... 216n), and each port (308a, 308b, 308c, ... 308n) includes a dedicated timer (402) for monitoring air sampling duration; and
providing a vacuum source (208) at a location (104) outside the controlled environment (102) that is in fluid communication with each tube port (408) in the controller (202) via a manifold, wherein the vacuum source (208), manifold, ports (308a, 308b, 308c, ... 308 n), and air tubes (220) are configured to simultaneously draw fluid from two or more of the two or more air sampling devices (216a, 216b, 216c, ... 216n);
**characterized in that** the method further comprises:
providing a touchpad (214), within the controlled environment (102), that is wirelessly connected to the controller (202) and includes a communication device (224) configured to send start and stop signals to the controller (202) to separately turn air flow on and off at different air sampling devices (216a, 216b, 216c, ..., 216n) with their corresponding flow switches (404) when collecting the volume of air;
communicating start and stop signals from the at least one touchpad (214) to the controller (202) to separately turn air flow on and off at different air sampling devices (216a, 216b, 216c, ..., 216n) with their corresponding flow switches (404) to draw a first predetermined volume of fluid through each of the different air sampling devices (216a, 216b, 216c, ..., 216n); and
starting air sampling cycles, by each of timer (402) of each port (308a, 308b, 308c, ... 308n), by issuing commands to open solenoids and start the vacuum pump (208).

2. The method according to claim 1, further comprising the step of identifying a quantity or concentration of contaminants in the volume of fluid or in the controlled environment (102).

3. The method according to claim 1, further comprising steps of
providing a purge vacuum source (206) in fluid communication with at least one air sampling device (216a, 216b, 216c, ... 216n) via a corresponding port (308a, 308b, 308c, ... 308n) in the controller (202);
isolating the at least one air sampling device (216a, 216b, 216c, ... 216n) from the controlled environment (102);
communicating a signal from the at least one touchpad (214) to the purge vacuum source (206) to draw a second predetermined volume of fluid through the at least one air sampling device (216a, 216b, 216c, ... 216n), wherein the second predetermined volume of fluid is a gas, a vapor, or a combination of a gas and vapor; and
outputting a signal when the second predetermine volume of the fluid has been collected or when a flow rate through the at least one air sampling device (216a, 216b, 216c, ... 216n) falls below or above a programmed value.

4. The method according to claim 1, wherein the wireless signal is transmitted by a base station (302) within the controlled environment (102) that is operatively connected to the touchpad (214).

5. The method according to claim 1, further comprising the steps of:
providing a timer circuit and a flow rate control circuit with the controller (202); outputting a first signal from the timer circuit to a solenoid to initiate a vacuum pump cycle;
outputting a second signal from each flow switch (404) to the flow rate control circuit representing the flow rate of fluid through each air sampling device (216a, 216b, 216c, ... 216n); and
outputting a third signal from the timer circuit to the solenoid to stop the vacuum pump cycle when a predetermine time period has elapsed.

6. The method according to claim 1, wherein each flow rate switch (404) separately maintains a rate of fluid flowing through each air sampling device (216a, 216b, 216c, ... 216n) to within about ±3-percent of a preprogrammed flow rate.

7. The method according to claim 1, wherein each port (308a, 308b, 308c, ..., 308n) corresponding to each air sampling device (216a, 216b, 216c, ..., 216n) includes dedicated power, hardware, software, and connectors.

8. The method according to claim 1, wherein the controller (202) is expandable such that it accommodates any number of ports (308a, 308b, 308c, ..., 308n) corresponding to any number of air sampling devices (216a, 216b, 216c, ..., 216n).

9. A sampling system for collecting a volume of air in a controlled environment (102) within a facility (100), comprising:
two or more air sampling devices (216a, 216b, 216c, ... 216n) at different locations within the controlled environment (102);
a controller (202) at a location (104) outside the controlled environment (102) that includes a separate port (308a, 308b, 308c, ... 308 n) corresponding to each of the two or more air sampling devices (216a, 216b, 216c, ... 216n), each port (308a, 308b, 308c, ... 308n) having its own dedicated flow switch (404) and tube port (408) in separate fluid communication with its corresponding air sampling device (216a, 216b, 216c, ... 216n) via a corresponding air tube (220), wherein each flow switch is configured to separately monitor fluid flow through its corresponding air sampling device (216a, 216b, 216c, ..., 216n) at or near a preprogrammed flow rate value;
a vacuum pump (208) located outside the controlled environment (102) that is in fluid communication with each tube port (408) via a manifold;
each port (308a, 308b, 308c, ... 308 n) includes a dedicated timer (402) for monitoring air sampling duration and starting air sampling cycles by issuing commands to open solenoids and start the vacuum pump (208); and
the vacuum pump (208), manifold, ports (308a, 308b, 308c, ... 308 n), and air tubes (220) are configured to simultaneously draw air from two or more of the two or more air sampling devices (216a, 216b, 216c, ... 216n);
**characterized in that** the system further comprises:
a touchpad (214) located in the controlled environment (102) that is wirelessly connected to the controller (202) and includes a communications device (212) configured to send start and stop signals to the controller to separately turn air flow on and off at different air sampling devices (216a, 216b, 216c, ... 216n) with their corresponding flow switches (404) when collecting the volume of air.

10. The air sampling system according to claim 9, further comprising a purge pump (206) and an isolation chamber (514).

11. The air sampling system according to claim 9, further comprising an interface (410) on the controller (202) for connecting the controller (202) to a data collection device.

12. The air sampling system according to claim 9, wherein each flow switch separately maintains a rate of fluid flowing through each air sampling device (216a, 216b, 216c, ..., 216n) to within about ±3 percent of a preprogrammed flow rate.

13. The air sampling system according to claim 9, further comprising a base station (302) that has a communications device (212) configured to wirelessly sent the start and stop signals from the touchpad (214) to the controller (202).

14. The air sampling system according to claim 9, wherein each port (308a, 308b, 308c, ..., 308n) corresponding to each air sampling device (216a, 216b, 216c, ..., 216n) includes dedicated power, hardware, software, and connectors.

15. The air sampling system according to claim 9, wherein the controller (202) is expandable such that it accommodates any number of ports (308a, 308b, 308c, ..., 308n) corresponding to any number of air sampling devices (216a, 216b, 216c, ..., 216n).

## Patentansprüche

1. Ein Verfahren zum Sammeln eines Luftvolumens aus einer kontrollierten Umgebung (102) innerhalb einer Anlage (100), welches die folgenden Schritte umfasst:
Bereitstellen von einem oder mehreren Luftprobennahmegeräten (216a, 216b, 216c, ..., 216n) an verschiedenen Orten innerhalb der kontrollierten Umgebung (102);
Bereitstellen einer Steuereinheit (202) an einem Ort (104) ausserhalb der kontrollierten Umgebung (102), welche einen Anschluss (308a, 308b, 308c, ... 308n) aufweist, der jeder der zwei oder mehr Luftprobennahmegeräten (216a, 216b, 216c, ..., 216n) entspricht, wobei jeder Anschluss (308a, 308b, 308c, ... 308n) einen eigenen Durchflussschalter (404) und einen eigenen Schlauchanschluss (408) in separater Flüssigkeitskommunikation mit seinem entsprechenden Luftprobennahmegerät (216a, 216b, 216c, ..., 216n) über einen entsprechenden Luftschlauch (220) aufweist, wobei jeder Durchflussschalter (404) derart konfiguriert ist, um den Flüssigkeitsstrom durch das entsprechende Luftprobennahmegerät (216a, 216b, 216c, ..., 216n) zu überwachen, und wobei jeder Anschluss (308a, 308b, 308c, ... 308n) eine eigene Zeitgeberschaltung zur Überwachung der Dauer der Luftprobenahme verfügt; und
Bereitstellen einer Vakuumquelle (208) an einem Ort (104) ausserhalb der kontrollierten Umgebung (102) in Flüssigkeitskommunikation mit jedem Schlauchanschluss (408) in der Steuereinheit (202) über einen Verteiler, worin die Vakuumquelle (208), der Verteiler, die Anschlüsse (308a, 308b, 308c, ... 308n) und die Luftschläuche (220) derart konfiguriert sind, um gleichzeitig Flüssigkeit von zwei oder mehreren der zwei oder mehreren Luftprobennahmegeräte (216a, 216b, 216c, ..., 216n) zu ziehen;
**dadurch gekennzeichnet, dass** das Verfahren zudem umfasst:
Bereitstellen eines Touchpads (214), innerhalb der kontrollierten Umgebung (102), in drahtloser Verbindung mit der Steuereinheit (202) und mit einem Kommunikationsgerät (224), welches zum Senden von Start- und Stoppsignalen an die Steuereinheit (202) für das getrennte Ein- und Ausschalten des Luftstroms an verschiedenen Luftprobennahmegeräten (216a, 216b, 216c, ..., 216n) mit ihren entsprechenden Durchflussschaltern (404) bei der Luftvolumenerfassung konfiguriert ist;
Übermitteln von Start- und Stoppsignalen von dem mindestens einen Touchpad (214) an die Steuereinheit (202) für das getrennte Ein- und Ausschalten des Luftstroms an verschiedenen Luftprobennahmegeräten (216a, 216b, 216c, ..., 216n) mit ihren entsprechenden Durchflussschaltern (404), um ein erstes vorbestimmtes Flüssigkeitsvolumen durch jedes der verschiedenen Luftprobennahmegeräte (216a, 216b, 216c, ..., 216n) zu ziehen; und
Einleiten von Luftprobennahmezyklen, durch jede Zeitgeberschaltung (402) jedes Anschlusses (308a, 308b, 308c, ... 308n), durch die Ausgabe von Befehlen zum Öffnen von Solenoiden und zum Starten der Vakuumpumpe.

2. Verfahren gemäss Anspruch 1, zudem umfassend den Schritt von Identifizieren einer Menge oder Konzentration von Schadstoffen im Flüssigkeitsvolumen oder in der kontrollierten Umgebung (102),

3. Verfahren gemäss Anspruch 1, zudem umfassend die folgenden Schritte:
Bereitstellen einer Spülvakuumquelle (206) in Fluidverbindung mit mindestens einem Luftprobennahmegerät (216a, 216b, 216c, ..., 216n) über einen Anschluss (308a, 308b, 308c, ... 308n) in der Steuereinheit (202);
Isolieren des mindestens einen Luftprobennahmegeräts (216a, 216b, 216c, ..., 216n) von der kontrollierten Umgebung (102);
Übermitteln eines Signals vom mindestens einen Touchpad (214) an die Spülvakuumquelle (206), um ein zweites vorbestimmtes Flüssigkeitsvolumen durch das mindestens eine Luftprobennahmegerät (216a, 216b, 216c, ..., 216n) zu ziehen, worin das zweite vorbestimmte Flüssigkeitsvolumen ein Gas, ein Dampf oder eine Kombination aus Gas und Dampf ist; und
Ausgeben eines Signals, wenn das zweite vorbestimmte Flüssigkeitsvolumen gesammelt wurde oder wenn eine Durchflussrate durch das mindestens eine Luftprobennahmegerät (216a, 216b, 216c, ..., 216n) unter oder über einen programmierten Wert fällt.

4. Verfahren gemäss Anspruch **1,** wobei das drahtlose Signal von einer Basisstation (302) innerhalb der kontrollierten Umgebung (102) übertragen wird, welche operativ mit dem Touchpad (214) verbunden ist.

5. Verfahren gemäss Anspruch **1,** zudem umfassend die folgenden Schritte:
Bereitstellen einer Zeitgeberschaltung und einer Durchflussraten-Steuerschaltung mit der Steuereinheit (202);
Ausgeben eines ersten Signals von der Zeitgeberschaltung an ein Solenoid, um einen Vakuumpumpenzyklus einzuleiten;
Ausgeben eines zweiten Signals von jedem Durchflussschalter (404) an die Durchflussraten-Steuerschaltung, welches die Durchflussrate der Flüssigkeit durch jedes Luftprobennahmegerät (216a, 216b, 216c, ..., 216n) darstellt; und
Ausgeben eines dritten Signals von der Zeitgeberschaltung an das Solenoid, um den Vakuumpumpenzyklus zu stoppen, wenn eine vorbestimmte Zeitspanne verstrichen ist.

6. Verfahren gemäss Anspruch 1, worin jeder Durchflussschalter (404) separat eine durch jedes Luftprobennahmegerät (216a, 216b, 216c, ..., 216n) fliessende Flüssigkeitsrate innerhalb von etwa ± 3 Prozent der vorprogrammierten Durchflussrate hält.

7. Verfahren gemäss Anspruch 1, worin jeder Anschluss (308a, 308b, 308c, ... 308n), welcher jedem Luftprobennahmegerät (216a, 216b, 216c, ..., 216n) entspricht, über eine eigene Stromversorgung, Hardware, Software und Anschlüsse verfügt.

8. Verfahren gemäss Anspruch 1, worin die Steuereinheit (202) derart erweiterbar ist, dass es eine beliebige Anzahl von Anschlüssen (308a, 308b, 308c, ... 308n), welche einer beliebigen Anzahl von Luftprobennahmegeräten (216a, 216b, 216c, ..., 216n) entsprechen, aufnehmen kann.

9. Probennahme-System zum Sammeln eines Luftvolumens in einer kontrollierten Umgebung (102) innerhalb einer Anlage (100), umfassend:
zwei oder mehr Luftprobennahmegeräte (216a, 216b, 216c, ..., 216n) an verschiedenen Orten innerhalb der kontrollierten Umgebung (102);
eine Steuereinheit (202) an einem Ort (104) ausserhalb der kontrollierten Umgebung (102), welche einen separaten Anschluss (308a, 308b, 308c, ... 308n) aufweist, der jeder der zwei oder mehr Luftprobennahmegeräten (216a, 216b, 216c, ..., 216n) entspricht, wobei jeder Anschluss (308a, 308b, 308c, ... 308n) einen eigenen Durchflussschalter (404) und Schlauchanschluss (408) in separater Flüssigkeitskommunikation mit seinem entsprechenden Luftprobennahmegerät (216a, 216b, 216c, ..., 216n) über einen entsprechenden Luftschlauch (220) aufweist, worin jeder Durchflussschalter derart konfiguriert ist, um den Flüssigkeitsstrom durch das entsprechende Luftprobennahmegerät (216a, 216b, 216c, ..., 216n) an oder nahe an einem vorprogrammierten Durchflusswert separat zu überwachen;
eine Vakuumpumpe (208) ausserhalb der kontrollierten Umgebung (102) in Flüssigkeitskommunikation mit jedem Schlauchanschluss (408) über einen Verteiler,
wobei jeder Anschluss (308a, 308b, 308c, ... 308n) eine eigene Zeitgeberschaltung (402) verfügt, zur Überwachung der Dauer der Luftprobenahme und zum Einleiten von Luftprobennahmezyklen durch die Ausgabe von Befehlen zum Öffnen von Solenoiden und zum Starten der Vakuumpumpe (208); und
wobei die Vakuumquelle (208), der Verteiler, die Anschlüsse (308a, 308b, 308c, ... 308n) und die Luftschläuche (220) derart konfiguriert sind, um gleichzeitig Luft von zwei oder mehreren der zwei oder mehreren Luftprobennahmegeräte (216a, 216b, 216c, ..., 216n) zu ziehen;
**dadurch gekennzeichnet, dass** das System zudem umfasst:
ein Touchpad (214), innerhalb der kontrollierten Umgebung (102), in drahtloser Verbindung mit der Steuereinheit (202) und mit einem Kommunikationsgerät (212), welches zum Senden von Start- und Stoppsignalen an die Steuereinheit für das getrennte Ein- und Ausschalten des Luftstroms an verschiedenen Luftprobennahmegeräten (216a, 216b, 216c, ..., 216n) mit ihren entsprechenden Durchflussschaltern (404) bei der Luftvolumenerfassung konfiguriert ist.

10. Luftprobenahmesystem gemäss Anspruch 9, zudem umfassend eine Spülpumpe (206) und eine Isolierkammer (514).

11. Luftprobenahmesystem gemäss Anspruch 9, zudem umfassend eine Schnittstelle (410) an der Steuerung (202) zum Verbinden der Steuerung (202) mit einem Datenerfassungsgerät.

12. Luftprobenahmesystem gemäss Anspruch 9, worin jeder Durchflussschalter (404) separat eine durch jedes Luftprobennahmegerät (216a, 216b, 216c, ..., 216n) fliessende Flüssigkeitsrate innerhalb von etwa ± 3 Prozent der vorprogrammierten Durchflussrate hält.

13. Luftprobenahmesystem gemäss Anspruch 9, zudem umfassend eine Basisstation (302), welche ein Kommunikationsgerät (212) konfiguriert zum drahtlosen Senden eines Start- und Stoppsignals vom Touchpad (214) an die Steuereinheit (202) umfasst.

14. Luftprobenahmesystem gemäss Anspruch 9, worin jeder Anschluss (308a, 308b, 308c, ... 308n), welcher jedem Luftprobennahmegerät (216a, 216b, 216c, ..., 216n) entspricht, über eine eigene Stromversorgung, Hardware, Software und Anschlüsse verfügt.

15. Luftprobenahmesystem gemäss Anspruch 9, worin die Steuereinheit (202) derart erweiterbar ist, dass es eine beliebige Anzahl von Anschlüssen (308a, 308b, 308c, ... 308n), welche einer beliebigen Anzahl von Luftprobennahmegeräten (216a, 216b, 216c, ..., 216n) entsprechen, aufnehmen kann.

## Revendications

1. Procédé pour collecter un volume d'air provenant d'un environnement contrôlé (102) à l'intérieur d'une installation (100), comprenant les étapes consistant à :
fournir deux ou plusieurs dispositifs d'échantillonnage d'air (216a, 216b, 216c,... 216n) à différents emplacements au sein de l'environnement contrôlé (102);
fournir un contrôleur (202) à un emplacement (104) à l'extérieur de l'environnement contrôlé (102) comprenant un port (308a, 308b, 308c, ... 308n) correspondant à chacun des deux ou plusieurs dispositifs d'échantillonnage d'air (216a, 216b, 216c,... 216n), chaque port (308a, 308b, 308c, ... 308n) ayant son propre commutateur de débit (404) et port de tube (408) en communication fluidique séparée avec son dispositif d'échantillonnage d'air correspondant (216a, 216b, 216c,... 216n) par le biais d'un tube d'air correspondant (220), chaque commutateur de débit (404) étant configuré pour surveiller séparément le débit de fluide à travers son dispositif d'échantillonnage d'air correspondant (216a, 216b, 216c,... 216n), et chaque port (308a, 308b, 308c, ... 308n) comprenant une minuterie dédiée (402) pour surveiller la durée de l'échantillonnage d'air, et
fournir une source de vide (208) à un emplacement (104) à l'extérieur de l'environnement contrôlé (102) qui est en communication fluidique avec chaque port de tube (408) dans le contrôleur (202) par le biais d'un collecteur, dans lequel la source de vide (208), le collecteur, les ports (308a, 308b, 308c, ... 308n) et les tubes d'air (220) sont configurés pour simultanément aspirer le fluide de deux ou plusieurs des deux ou plusieurs dispositifs d'échantillonnage d'air (216a, 216b, 216c,... 216n) ;
**caractérisé en ce que** le procédé comprend en outre :
de fournir un pavé tactile (214), au sein de l'environnement contrôlé (102), qui est connecté sans fil au contrôleur (202) et qui comprend un dispositif de communication (224) configuré pour envoyer des signaux de démarrage et d'arrêt au contrôleur (202) pour démarrer et arrêter séparément le débit d'air au niveau des différents dispositifs d'échantillonnage d'air (216a, 216b, 216c,... 216n) avec leurs commutateurs de débit correspondants (404) lors de la collecte du volume d'air ;
de communiquer des signaux de démarrage et d'arrêt provenant du au moins un pavé tactile (214) au contrôleur (202) pour aspirer un premier volume prédéterminé de fluide à travers chacun des différents dispositifs d'échantillonnage d'air (216a, 216b, 216c,... 216n); et
démarrer les cycles d'échantillonnage d'air, par chacune des minuteries (402) de chaque port (308a, 308b, 308c, ... 308n), en émettant des commandes d'ouvrir les solénoïdes et démarrer la pompe à vide (208).

2. Procédé selon la revendication 1, comprenant en outre l'étape d'identification d'une quantité ou concentration de contaminants dans le volume de fluide ou dans l'environnement contrôlé (102).

3. Procédé selon la revendication 1, comprenant en outre les étapes consistant à:
fournir une source de vide de purge (206) en communication fluidique avec au moins un dispositif d'échantillonnage d'air (216a, 216b, 216c,... 216n) par le biais d'un port correspondant (308a, 308b, 308c,... 308n) dans le contrôleur (202) ;
isoler le au moins un dispositif d'échantillonnage d'air (216a, 216b, 216c, ... 216n) de l'environnement contrôlé (102);
communiquer un signal provenant du au moins un pavé tactile (214) à la source de vide de purge (206) pour aspirer un deuxième volume prédéterminé de fluide à travers le au moins un dispositif d'échantillonnage d'air (216a, 216b, 216c,... 216n), dans lequel le deuxième volume prédéterminé de fluide est un gaz, une vapeur ou une combinaison d'un gaz et d'une vapeur ; et
émettre un signal lorsque le deuxième volume prédéterminé du fluide a été collecté ou lorsqu'un débit à travers le au moins un dispositif d'échantillonnage d'air (216a, 216b, 216c, ... 216n) tombe en dessous ou au-dessus d'une valeur programmée.

4. Procédé selon la revendication 1, dans lequel le signal sans fil est transmis par une station de base (302) au sein de l'environnement contrôlé (102) qui est fonctionnellement connecté au pavé tactile (214).

5. Procédé selon la revendication 1, comprenant en outre les étapes consistant à:
fournir un circuit de minuterie et un circuit de commande de débit avec le contrôleur (202) ;
émettre un premier signal depuis le circuit de minuterie vers un solénoïde pour lancer un cycle de pompe à vide ;
émettre un deuxième signal depuis chaque commutateur de débit (404) vers le circuit de commande de débit représentant un débit de fluide à travers chaque dispositif d'échantillonnage d'air (216a, 216b, 216c, ... 216n); et
émettre un troisième signal depuis le circuit de minuterie vers le solénoïde pour arrêter le cycle de la pompe à vide lorsqu'une période de temps prédéterminée s'est écoulée.

6. Procédé selon la revendication 1, dans lequel chaque commutateur de débit (404) maintient séparément un débit de fluide s'écoulant à travers chaque dispositif d'échantillonnage d'air (216a, 216b, 216c, ... 216n) à environ ± 3 pour cent d'une valeur de débit préprogrammée.

7. Procédé selon la revendication 1, dans lequel chaque port (308a, 308b, 308c, ... 308n) correspondant à chaque dispositif d'échantillonnage d'air (216a, 216b, 216c, ... 216n) comprend des alimentations, équipements, logiciels et connecteurs dédiés.

8. Procédé selon la revendication 1, dans lequel le contrôleur (202) est extensible de manière à pouvoir accueillir un nombre quelconque de ports (308a, 308b, 308c, ... 308n) correspondant à un nombre quelconque de dispositifs d'échantillonnage d'air (216a, 216b, 216c, ... 216n).

9. Système d'échantillonnage pour collecter un volume d'air dans un environnement contrôlé (102) à l'intérieur d'une installation, comprenant :
deux ou plusieurs dispositifs d'échantillonnage d'air (216a, 216b, 216c, ... 216n) à différents emplacements au sein de l'environnement contrôlé (102);
un contrôleur (202) à un emplacement (104) à l'extérieur de l'environnement contrôlé (102) comprenant un port séparé (308a, 308b, 308c, ... 308n) correspondant à chacun des deux ou plusieurs dispositifs d'échantillonnage d'air (216a, 216b, 216c, ... 216n), chaque port (308a, 308b, 308c, ... 308n) ayant son propre commutateur de débit (404) et port de tube (408) en communication fluidique séparée avec son dispositif d'échantillonnage d'air correspondant (216a, 216b, 216c, ... 216n) par le biais d'un tube d'air correspondant (220), dans lequel chaque commutateur de débit est configuré pour surveiller séparément le débit de fluide à travers son dispositif d'échantillonnage d'air correspondant (216a, 216b, 216c, ... 216n) à, ou à environ, une valeur de débit préprogrammée ;
une pompe à vide (208) située à l'extérieur de l'environnement contrôlé (102) qui est en communication fluidique avec chaque port de tube (408) par le biais d'un collecteur ;
chaque port (308a, 308b, 308c, ... 308n) comprenant une minuterie dédiée (402) pour surveiller la durée de l'échantillonnage d'air et démarrer les cycles d'échantillonnage d'air en émettant des commandes d'ouvrir les solénoïdes et démarrer la pompe à vide (208) ; et
la pompe à vide (208), le collecteur, les ports (308a, 308b, 308c, ... 308n) et les tubes d'air (220) sont configurés pour simultanément aspirer l'air de deux ou plusieurs des deux ou plusieurs dispositifs d'échantillonnage d'air (216a, 216b, 216c, ... 216n) ;
**caractérisé en ce que** le système comprend en outre :
un pavé tactile (214) situé au sein de l'environnement contrôlé (102), qui est connecté sans fil au contrôleur (202) et qui comprend un dispositif de communication (212) configuré pour envoyer des signaux de démarrage et d'arrêt au contrôleur pour démarrer et arrêter séparément le débit d'air au niveau des différents dispositifs d'échantillonnage d'air (216a, 216b, 216c, ... 216n) avec leurs commutateurs de débit correspondants (404) lors de la collecte du volume d'air.

10. Système d'échantillonnage d'air selon la revendication 9, comprenant en outre une pompe de purge (206) et une chambre d'isolation (514).

11. Système d'échantillonnage d'air selon la revendication 9, comprenant en outre une interface (410) sur le contrôleur (202) pour connecter le contrôleur (202) à un dispositif de collecte de données.

12. Système d'échantillonnage d'air selon la revendication 9, dans lequel chaque commutateur de débit maintient un débit de fluide s'écoulant à travers chaque dispositif d'échantillonnage d'air (216a, 216b, 216c, ... 216n) à environ ± 3 pour cent de la valeur de débit préprogrammée.

13. Système d'échantillonnage d'air selon la revendication 9, comprenant en outre une station de base (302) ayant un dispositif de communication (212) configuré pour envoyer sans fil un signal de démarrage et d'arrêt depuis le pavé tactile (214) vers le contrôleur (202).

14. Système d'échantillonnage d'air selon la revendication 9, dans lequel chaque port (308a, 308b, 308c, ... 308n) correspondant à chaque dispositif d'échantillonnage d'air correspondant (216a, 216b, 216c, ... 216n) comprend des alimentations, équipements, logiciels et connecteurs dédiés.

15. Système d'échantillonnage d'air selon la revendication 9, dans lequel le contrôleur (202) est extensible de manière à pouvoir accueillir un nombre quelconque de ports (308a, 308b, 308c, ... 308n) correspondant à un nombre quelconque de dispositifs d'échantillonnage d'air (216a, 216b, 216c, ... 216n).
